# NEUE EUROPÄISCHE PATENTSCHRIFT

(11) **EP 0 630 463 B2**
(45) Veröffentlichungstag und Bekanntmachung des Hinweises auf die Entscheidung über den Einspruch: **21.04.1999**
(45) Hinweis auf die Patenterteilung: 29.05.1996
(21) Anmeldenummer: 93906510.8
(22) Anmeldetag: 12.03.1993
(51) Int. Cl.: F24H 1/10

(54) **ELEKTRISCHER DURCHLAUFERHITZER**
ELECTRIC INSTANTANEOUS WATER HEATER
CHAUFFE-EAU ELECTRIQUE INSTANTANE

(30) Priorität: 18.03.1992 DE 4208675; 07.04.1992 DE 4211590
(43) Veröffentlichungstag der Anmeldung: 28.12.1994
(73) Patentinhaber: KKW Kulmbacher Klimageräte-Werk GmbH, D-95326 Kulmbach (DE)
(72) Erfinder: KOHLRUSCH, Gerd-Dietmar, D-8650 Kulmbach/Burghaig (DE); RODECKER, Artur, D-8650 Kulmbach (DE); SHIRKANI, Ghanbar, D-8674 Naila (DE)
(74) Vertreter: Zenz, Joachim Klaus, Dipl.-Ing.
(86) Internationale Anmeldenummer: EP9300572
(87) Internationale Veröffentlichungsnummer: WO9319332

(56) Entgegenhaltungen:
- WO-A-91/17640
- DE-A- 3 609 213
- DE-B- 1 232 720
- DE-B- 1 243 858
- DE-B- 1 301 033
- DE-U- 1 829 169
- DE-U- 1 845 563
- DE-U- 8 525 128

## Beschreibung

Die Erfindung bezieht sich auf einen elektrischen Durchlauferhitzer nach dem Oberbegriff des Anspruchs 1.

Neuere elektrische Durchlauferhitzer weisen in der Regel einen Kunststoffblock auf, in welchem mehrere von dem zu erwärmenden Wasser durchströmte Bohrungen ausgebildet sind. Ein Teil der Bohrungen gehört zur Heizstrecke und enthält je eine Heizwendel, während die restlichen Bohrungen Abschnitte einer ersten bzw. zweiten elektrischen Isolationsstrecken bilden. An den Kopfteilen des Kunststoffblocks sind Krümmer ausgebildet, welche die Bohrungen miteinander derart verbinden, daß der mäanderförmigen ersten Isolationsstrecke eine mäanderförmige Heizstrecke und dieser eine wiederum mäanderförmige zweite Isolationsstrekke folgt. Auf diese Weise ergeben sich in dem Kunststoffblock zahlreiche geradlinige Leitungsabschnitte, die durch ebenso zahlreiche Umlenkungen an den Kopfteilen miteinander verbunden sind. Diese bekannte Konstruktion ist nicht ohne Nachteile. Die Zahl und Länge der in dem Kunststoffblock integrierten Leitungsabschnitte muß so bemessen sein, daß ein vorgeschriebener elektrischer Isolationswiderstand der Wassersäule sowohl auf der Kaltwasser- als auch auf der Warmwasserseite selbst bei ungünstigsten Wasserqualitäten (hohe Leitfähigket) gewährleistet ist. Die Baugröße des Gesamtblocks muß daher den jeweils ungünstigsten Verhältnissen angepaßt werden. Die zahlreichen Umlenkungen - bei einer bekannten Konstruktion sind beispielsweise zehn Umlenkstellen mit jeweils 180°-Umlenkungen vorgesehen - erhöhen den Strömungswiderstand und dementsprechend die Trägheit des Regelverhaltens des Durchlauferhitzers. Die systemeigene Trägheit kann nur durch eine entsprechend aufwendige Steuereinrichtung kompensiert werden. Diese Steuereinrichtung muß dafür sorgen, daß die gewünschte Solltemperatur auch bei Volumenstromänderungen an der Warmwasserzapfstelle eingestellt und beibehalten werden kann. Ein weiterer wesentlicher Nachteil der bekannten Blockkonstruktion besteht dann, daß bei Ausfall oder Störung einer von mehreren Heizwendeln und/oder Blockierung eines der zahlreichen Strömungskanäle im Kunststoffblock der Austausch des gesamten Kunststoffblocks notwendig ist. Der Kostenaufwand für diesen Austausch kommt in die Nähe der Neuanschaffung eines elektrischen Durchlauferhitzers modemerer Konzeption. Hier greift die Erfindung ein.

Der Erfindung liegt die Aufgabe zugrunde, den baulichen und betrieblichen Aufwand bei einem elektrischen Durchlauferhitzer der eingangs genannten Art zu verringern. Dabei sollen zumindest vergleichbare oder sogar verbesserte Leistungsmerkmale erreicht werden.

Diese Aufgabe wird erfindungsgemäß gelöst durch die Merkmale des Anspruchs 1.

Die DE-A-3 609 213 offenbart einen elektrischen Durchlauferhitzer mit einem Kaltwasser-Einlauf, einer ersten Isolationsstrecke, einer dieser nachgeschalteten Heizstrecke, einer zweiten Isolationsstrecke und einem Warmwasser-Auslauf, wobei die Heizstrecke aus wenigstens einem rohrförmigen Heizmodul besteht, der ein in den Wasserweg eingebundenes, im wesentlichen gerades und rundes Rohr zur Aufnahme eines Heizelementes und von beiden Rohrenden abgehende Anschlußstutzen aufweist, und wobei die ersten und zweiten Isolationsstrecken als flexible Schläuche ausgebildet sind, die jeweils mit einem Anschlußstutzen eines Heizmoduls druckdicht verbunden sind. Eine Beeinflussung der Wasserströmung durch Turbulenzelemente ist nicht vorgesehen.

Letzteres gilt auch für den elektrischen Durchlauferhitzer nach der DE-A-1 232 720, der ebenfalls mit rohrförmigen Heizmodulen arbeitet, wobei die Isolationsstrecken als starre Modulen mit den Heizmodulen blockartig verbunden sind.

Die Erfindung geht ab von dem bisher üblichen Konzept der Zusammenfassung der beiden Isolationsstrecken und der Heizstrecke zu einer untrennbaren, blockförmigen Baueinheit. Stattdessen sieht die Erfindung getrennt hergestellte und erst bei der Montage vereinigte Module für die Heizstrecke und preiswerte und variable Schläuche für die beiden Isolationsstrecken vor. Dies hat zahlreiche Vorteile. Flexible Schläuche lassen in einem ohnehin erforderlichen Gehäuse optimal anordnen, wobei die Anzahl und die Krümmungsradien der Umlenkungen minimiert, daß heißt, die Schläuche in möglichst großen Windungen geführt werden, um die Strömungswiderstände zu minimieren. Die Längen der aus Schläuchen bestehenden Isolationsstrecken können den jeweiligen spezifischen Wasserwiderständen angepaßt werden. Bei guter Wasserqualität bzw. hohem spezifischen Widerstand des Wasser genügen kurze Schläuche zur Einhaltung des vorgeschriebenen Isolationswiderstandes; unter ungünstigen Verhältnissen sind die (relativ preiswerten) Schläuche in entsprechend größeren Längen vorzusehen.

Besondere betriebliche Vorteile ergeben sich aus der Anordnung von wendelförmigen Turbulenzelementen an der Innenwand des Heizwendel-Aufnahmerohrs. Die dadurch hervorgerufenen Turbulenzen verstärken den Wärmeübergang von der Heizwendel auf das zu beheizende turbulente Fluid. Als Folge davon läßt sich bei gleichem Wärmebedarf an der Zapfstelle die Temperatur an der Heizwendel jedes Heizmoduls verringern. Die geringere thermische Beanspruchung bei gleicher Wärmeübergabe erhöht die Lebensdauer der Heizwicklung. Bei Störungen in einer Heizwicklung oder Verstopfungen in einem Leitungsabschnitt genügt es, nur den beteiligten Modul zu reparieren oder auszutauschen. Dieser Aufwand ist vergleichsweise gering.

Bei der Erfindung sind die Turbulenzelemente durch wenigstens eine an der Innenwand des Heizwendel-Aufnahmerohres ausgebildete wendelförmige Rippe gebildet. Diese Rippe hat vorzugsweise einen abgerundeten oder spitzen Rükken. Diese Rippengestaltung hat den Vorteil, daß die sich im Betrieb an die Innenwand anlegende Heizwendel nur in Punktberührung mit dem Rippen rücken steht. Bei wendelförmigen Verlauf der Turbulenzelemente sind die Wendelrichtungen der Turbulenzelemente und der Heizwendel vorzugsweise gegenläufig vorgesehen.

Eine bevorzugte Ausführungsform der Erfindung ist dadurch gekennzeichnet, daß die Heizstrecke mehrere Heizmodule aufweist, die über komplementär gestaltete Anschlußstutzen lösbar miteinander gekuppelt und in Reihe geschaltet sind. Der Zusammenbau und der Einbau der Heizstrecke kann dadurch begünstigt werden, daß die einem Heizmodul zugeordneten beiden Anschlußstutzen etwa radial und nach entgegengesetzten Seiten vom Aufnahmerohr abgehende, komplementäre Einsteck- und Aufnahmeteile und/oder komplementäre Bajonettkupplungen sind. In dieser Ausführungsform können alle Heizmodule identische Gestaltungen haben. Mehrere Heizmodule werden beim Zusammenbau des Gerätes, bajonettartig gekuppelt; ebenso die Anschlußstutzen mit passenden Schlauchtüllen zum Anschluß der beiden Isolationsstrecken an die Kalt- und Warmwasserseiten der Heizstrecke. Auf diese Weise können - einfach durch Änderung der Anzahl der verwendeten Heizmodule - Durchlauferhitzer mit stark unterschiedlichen Leistungsmerkmalen aus prinzipiell den gleichen Komponenten und Heizmodulen zusammengesetzt werden.

Um die im Betrieb unvermeidbare axiale Auslenkbewegung der Heizwendel bei Anströmen durch das zu beheizende Fluid zu begrenzen, können gemäß einer Weiterbildung der Erfindung von der Innenwand des Heizwendel-Aufnahmerohrs vorspringende Haltemittel beispielsweise in Form von radialen Zapfen o.dgl. vorgesehen sein. Um die Wirkung der Haltemittel zu optimieren, sollten sie sowohl axial beabstandet als auch umfangsversetzt sein.

Aufgrund der Modulbauweise der Funktionskomponenten des erfindungsgemäßen elektrischen Durchlauferhitzers genügt ein vergleichsweise kleines Gerätegehäuse. Die rohrförmigen Heizmodule können in Griffschalen einer Gehäuse-Unterform gehalten sein. Dies gilt auch für die die Isolationsstrecke bildenden Kunststoffschläuche, die in schlaufenförmigen Windungen knickfrei festgelegt sein können.

Das in der Regel in Durchlauferhitzern eingebaute Rückschlagventil kann in einen den Kaltwasser-Einlauf bildenden Kupplungsblock eingebaut sein. Wenn letzterer über ein flexibles Kupplungsstück mit dem Steuerabschnitt der Kaltwasserleitung verbunden ist, so lassen sich die störenden Rückschlaggeräusche verringern, da der Körperschall nur minimal auf die starren Geräteteile übertragen wird.

Bei einer bevorzugten Ausführungsform der Erfindung weist die Heizstrecke wenigstens zwei einzeln steuerbare und/oder schaltbare Heizelemente auf, von denen wenigstens eines wärmebedarfsabhängig steuerbar und eines als letzte Heizstufe zur Deckung des höchsten Wärmebedarfbereichs zuschaltbar ist.

Durch diese Stufung der Heizelemente und deren separate Steuerungs- und Schaltmöglichkeiten läßt sich ein Wärmebedarf in beliebig großen Bereichen reaktionsschnell decken. Bei niedrigem Wärmebedarf braucht nur ein Heizelement mit geeignet hoher Heizleistung aktiviert zu werden.

Sind entsprechend einer vorteilhaften Weiterbildung der Erfindung mehrere Heizelemente im Strömungsweg des zu erwärmenden Fluids hintereinander geschaltet, so bleibt das thermisch am höchsten beanspruchte letzte Heizelement, das auf der höchsten Temperatur arbeitet, nur bei Bedarf und über die kürzeste Einschaltdauer aktiviert. Das thermisch am niedrigsten beanspruchte Heizelement ist dagegen bei Einschalten des elektrischen Durchlauferhitzers sofort und über die gesamte Freigabedauer wirksam und wird bedarfsabhängig gesteuert.

Die Zuverlässigkeit der Erhitzerfunktion wird gemäß einem weiteren Aspekt der Erfindung dadurch verbessert, daß ein erster Temperatursensor zur Messung der Fluid-Temperatur im Kaltwasserbereich und ein zweiter Temperatursensor zur Messung der Fluidtemperatur im Warmwasserbereich sowie Mittel zur Zwangskühlung von temperaturempfindlichen elektronischen Bauelementen der Steuereinrichtung vorgesehen sind, und daß die Mittel zur Zwangskühlung zumindestens dann wirksam gemacht werden, wenn die vom ersten Temperatursensor gemessene Kaltwassertemperatur einen oberen Grenzwert übersteigt.

Durch diese erfindungsgemäße Maßnahme kann ein unerwünschtes Unterbrechen des Gerätebetriebs (infolge Übertemperaturschutz der elektronischen Komponenten) auch dann verhindert werden, wenn die Kaltwasser-Zulauftemperatur ungewöhnlich hoch ist und in einen Bereich oberhalb der Grenztemperatur kommt. Bei Bedarf wird eine Zwangskühlung der temperaturempfindlichen Bauelemente vorzugsweise durch einen Lüfter und über einen mit den zu kühlenden elektronischen Bauelementen in wärmeübertragender Beziehung stehenden Luft-Führungskanal eingeschaltet.

Eine Erhöhung der Funktionalität läßt sich in Weiterbildung der Erfindung dadurch erreichen, daß Mittel zur Messung des elektrischen Widerstands der Wassersäule zwischen zwei Heizelementen und eine Einrichtung zur Auswertung des Meßergebnisses vorgesehen sind. Der Widerstand zwischen den Blankdraht-Heizelementen ist abhängig von der Qualität des zu erhitzenden Wassers sowie der Länge der Wassersäule zwischen den beiden Heizelementen. Da die Länge der Wassersäule eine konstante Größe ist, ist der Widerstand ein Maß für die Wasserqualität. Die Widerstandsmessung zwischen zwei Heizelementen läßt sich auch zur Trockenlaufüberwachung bzw. zum Schutz gegen ein Betreiben der Heizwicklung unter trockenen Bedingungen verwenden. Zu diesem Zweck ist die Auswerteeinrichtung mit Mitteln zur Unterbrechung der Heizelementenströme versehen und dann wirksam, wenn der Widerstand zwischen den Heizelementen größer als ein vorgegebener Grenzwert ist.

Eine besonders hohe Funktionszuverlässigkeit, ein verbessertes Störverhalten und eine erhöhte Schnelligkeit bzw. Reaktionsgeschwindigkeit lassen sich bei einem besonderen Ausführungsbeispiel der Erfindung dadurch erreichen, daß die Steuereinrichtung eine Fuzzy-Logikzur Verarbeitung der Meßwerte und Steuerung der Heizleistungen aufweist.

Soll der Durchlauferhitzer mehrere Zapfstelle bedienen, so sollte eine Volumenstrom-Begrenzung eingebaut sein.

Ein weiterer wichtiger Aspekt der Erfindung liegt in dem Verfahren zur Herstellung des rohrförmigen Heizmoduls in dem erfindungsgemäßen Durchlauferhitzer. Hierbei wird in einer Außenform, welche sowohl dem Aufnahmerohr als auch dem Anschlußstutzen die äußere Form gibt, ein zum Rohr koaxialer Kern derart eingetaucht, daß er allseits einen gleichmäßigen Umfangsabstand zur Außenform hat. Der Kem wird mit wenigstens einer wendelförmigen Rippe nach Art eines Gewindes hoher Steigung versehen. Der Raum zwischen der Außenform und dem Kern wird danach im Spritzgießverfahren mit Kunststoff gefüllt. Nach dem Aushärten wird der Kem an einem axialen Ende des Formstücks unter schraubenartiger Drehbewegung herausgezogen.

Weitere vorteilhafte Ausgestaltungen der Erfindung sind in den Unteransprüchen gekennzeichnet.

Im folgenden wird die Erfindung anhand eines in der Zeichnung schematisch dargestellten Ausführungsbeispiels näher erläutert. In der Zeichnung zeigen:
Fig. 1 eine schematische Darstellung der wesentlichen Funktionselemente eines Ausführungsbeispiels des erfindungsgemäßen elektrischen Durchlauferhitzers;
Fig. 2 eine Batterie aus drei miteinander gekuppelten, übereinstimmenden Kunststoffmodulen, die zu der Heizstrecke des Durchlauferhitzers gemäß Fig. 1 gehören; und
Fig. 3 eine schematisches Schaltbild des Ausführungsbeispiels mit einer eine Fuzzy-Logik enthaltenden Steuereinrichtung.

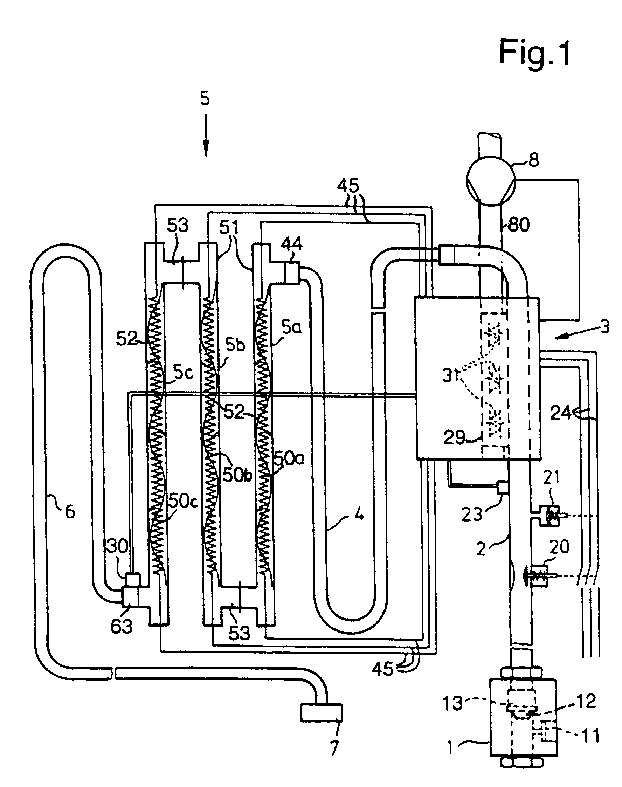

Der in Figur 1 darstellte Durchlauferhitzer weist die folgenden wesentlichen Funktionselemente auf: einen Kaltwassereinlauf 1, eine Steuereinrichtung 3, die insbesondere zur Steuerung der Heizleistung dient, eine erste Isolationsstrecke 4, eine dieser nachgeschaltete Heizstrecke 5 mit ersten, zweiten und dritten Heizmodulen 5a, 5b und 5c, die übereinstimmende Ausbildung haben, ferner eine der Heizstrecke nachgeschaltete zweite Isolationsstrecke 6 und einen Warmwasser-Auslauf 7.

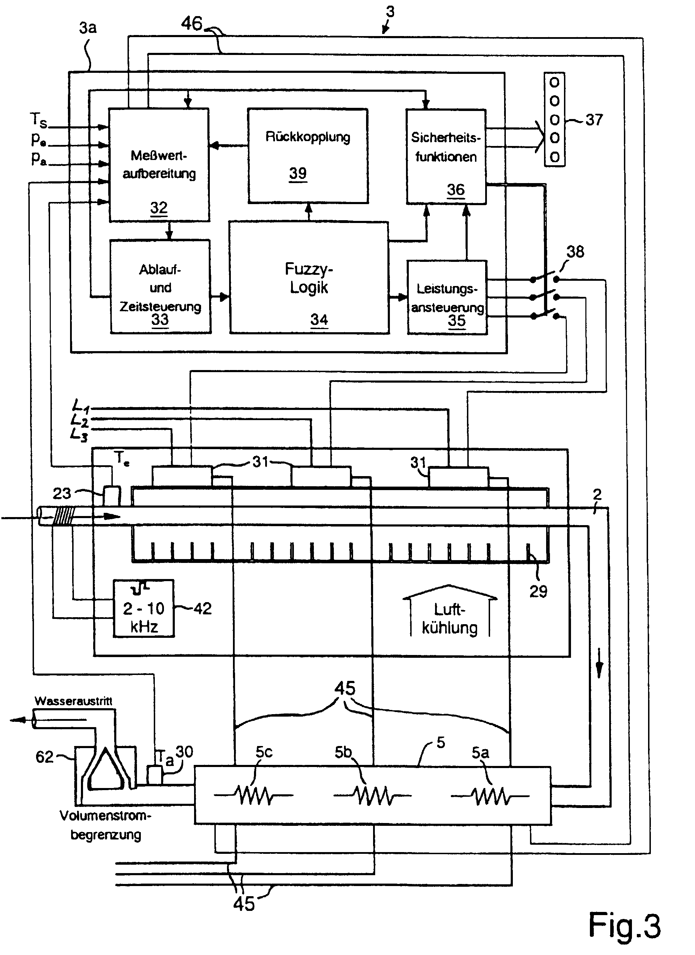

Der Kaltwassereinlauf 1 ist als Metallblock ausgebildet, in welchem zusätzlich zum Kaltwasseranschluß ein handbetätigbares Absperrventil 11, ein Wasserfilter 12 und ein Rückschlagventil 13 integriert sind. Stromab des Kaltwasser-Einlaufblocks 1 ist ein in der Regel starrer Leitungsabschnitt 2 angeordnet, an dem die Steuereinrichtung 3 angebracht und verschiedene, bei Durchlauferhitzern übliche Meß- und Steuerelemente angeordnet sind. Hierzu gehören ein Differenzdruck- oder Strömungsschalter 20, der bei Entnahme von Wasser am Warmwasserauslauf 7 den elektrischen Heizstromkreis zur Steuereinrichtung 3 schließt, und ein Überdruckschalter 21, der bei einem Überdruck im Leitungsabschnitt 2 die Stromversorgung 24 zumindest für die Leistungsansteuerung unterbricht. Zur Erfassung der Temperatur und ggf. des Drucks auf der Kaltwasserseite dient eine Fühleranordnung 23, die mit der Steuereinrichtung 3 verbunden ist. In der Steuereinrichtung 3 sind TRIAC's 31 zur separaten Steuerung der Heizleistung der die Heizstrecke 5 bildenden einzelnen Heizmodule 5a, 5b und 5c vorgesehen. Die Leistungsansteuerung der Heizwendeln 50a...50c erfolgt über separate Heizleitungen 45. Funktion und Ausbildung der Steuereinrichtung 3 wird weiter unten in Verbindung mit Figur 3 erläutert.

Die Leistungsansteuerung der Heizelemente 50a... 50c erfolgt über Leistungstransistoren oder TRIAC's 31, die bekanntlich temperaturempfindlich sind. Zur Kühlung der TRIAC's 31 wird bei dem hier beschriebenen Ausführungsbeispiel (ähnlich dem Stande der Technik) das eintretende Kaltwasser genutzt. Die TRIAC's sind auf einem Wärmetauscher 29 montiert, der in wärmeübertragendem Kontakt mit der Rohrleitung 2 und über diese mit dem zulaufenden Kaltwasser steht. Kaltwasser ist im normalen Temperaturbereich < 20°C zur TRIAC-Kühlung bestens geeignet, zumal die TRIAC-Wärme nur dann abzuführen ist, wenn der Durchlauferhitzer im Betrieb ist, und frisches Kaltwasser den Kühlabschnitt laufend durchströmt. Die Kühlwirkung des zuströmenden Kaltwassers ist aber nur dann ausreichend, wenn die Kaltwassertemperatur einen vom thermischen Widerstand der TRIAC-Montageanordnung und der Verlustleistung abhängigen Maximalwert nicht überschreitet. Dies ist nicht immer gewährleistet. Bei ungenügender Kühlung erfolgt eine Sicherheitsabschaltung und damit eine Funktionsunterbrechung des Durchlauferhitzers.

Bei dem Ausführungsbeispiel gemäß Figur 1 ist zur Gewährleistung einer ausreichenden TRIAC-Kühlung selbst bei hohen Kaltwasser-Eintrittstemperaturen ein zusätzlicher Lüfter 8 vorgesehen, der über die Steuereinrichtung 3 nach Maßgabe des Kaltwasser-Temperaturmeßwerts (Fühleranordnung 23) bedarfsgerecht eingeschaltet wird. Übersteigt die Kaltwassertemperatur den Grenzwert von beispielsweise 20°C, wird der Lüfter 8 eingeschaltet. Der vom Lüfter 8 erzeugte Luftstrom wird über einen geeigneten Belüftungskanal 80 auf Kühlrippen des Wärmetauschers 29 (Fig. 3) gerichtet, so daß zu jeder Zeit für eine ausreichende Wärmeabfuhr von den TRIAC's 31 gesorgt ist.

Die als Wendel ausgebildeten Heizelemente 50a-c bestehen aus blanken Heizwiderstandsdrähten, die einen vorzüglichen Wärmeübergang zu dem zu beheizenden Fluid (Wasser) gewährleisten. Vorgeschrieben sind bestimmte Isolationswiderstände zwischen den blanken Heizwendeln und der nächsten metallischen Anschlußstelle im Strömungsweg des Wassers. Dementsprechend lang müssen die vom Fluid durchströmten Leitungen zwischen den jeweiligen Heizmodulen 5a bzw. 5c und den Anschlüssen auf der Kalt- bzw. Warmwasserseite sein. Diese Fluidleitungswege werden bei dem dargestellten Durchlauferhitzer durch flexible Schläuche aus elektrisch isolierendem Material gebildet. Diese Schläuche lassen sich einerseits problemlos mit entsprechenden Anschlußstutzen kuppeln und andererseits einfach und platzsparend verlegen. So können sie beispielsweise in Schleifen hinter der Heizstrekke 5 in einem in der Zeichnung nicht dargestellten Gehäuse (Unterform) untergebracht sein. Der Schleifendurchmesser wird genügend groß gewählt, damit die mechanischen Strömungswiderstände begrenzt und damit die Druckverluste in den die Isolationsstrecken bildenden Leitungen gering gehalten werden können.

Am Ausgang des im Strömungsweg letzten Heizmoduls 5c ist eine Meßfühleranordnung 30 mit einem Temperaturfühler und einem Druckfühler vorgesehen. Die Meßfühleranordnung 30 ist mit der Steuereinrichtung 3 verbunden. Die Meßfühleranordnung 30 nimmt teil an der Steuerung oder Regelung der Heizleistung mit Hilfe der TRIAC's.

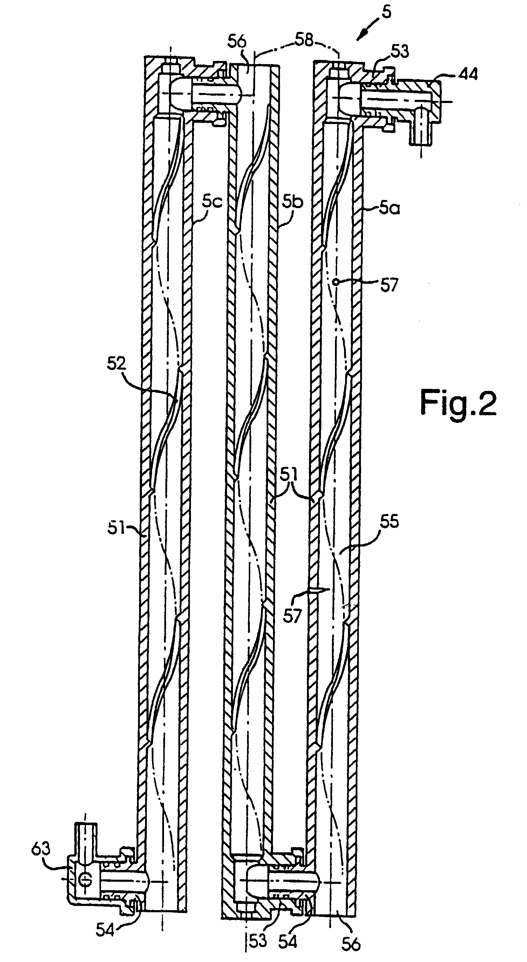

Ein wesentlicher Aspekt der Erfindung ist die besondere Gestaltung der einzelnen Heizmodule 5a, 5b und 5c, die nachfolgend anhand der Figur 2 erläutert wird.

Die Heizwendel-Aufnahmerohre 51 dreier Heizmodule 5a, 5b und 5c sind in der schematischen Darstellung gemäß Figur 2 über Anschlußstutzen (Aufnahme-und Steckteile 53, 54) lösbar miteinander gekuppelt. Passende Kupplungsstücke 44 und 63 sind an die Anschlußstutzen 53 und 54 der ersten und letzten Heizmodule 5a und 5c lösbar und flüssigkeitsdicht angeschlossen. Wie leicht zu sehen ist, können die einzelnen Heizungsmodule durch Lösen und Zusammenstecken der komplementären Kupplungsstutzen problemlos ausgetauscht oder ergänzt werden. Die Kupplungsstükke 44 und 63 sind in bekannter Weise mit den die Isolationsstrecken bildenden Schläuchen 4 und 6 zusammengesteckt. Die Ausbildung der Kupplungsstücke und Anschlußstutzen sowie der Dichtelemente kann bekannter Art sein. Wesentlich ist, daß die notwendige Dichtung an den Verbindungsstellen unter den in der Heizstrecke herrschenden Drücken und Temperaturen gewährleistet ist. Anstelle der in Figur 2 dargestellten Steckkupplungen können auch andere Verbindungen, z.B. Schraubverbindungen mit Überwurfmuttern oder Bajonettverschlüsse vorgesehen sein, die bei einem relativen Verdrehen unter Herstellung der erforderlichen Dichtung zusammenrücken.

Jeder Heizmodul 5a, 5b und 5c ist in der Darstellung in Figur 2 offen und ohne zugehörige Heizwendel 50a, 50b bzw. 50c gezeigt. An der Innenwand jedes Aufnahmerohrs 51 ist eine Rippe 52 mit dreieckigem Querschnitt angeformt, die einen wendelförmigen Verlauf nach Art eines mehrgängigen und steilen Gewindes hat. Diese Rippe 52 gibt der Heizwendel 50a... 50c den äußeren, mantelförmigen Halt. Die Wendelrichtungen der Rippe 52 und der Heizwendel 50a... 50c sind vorzugsweise gegenläufig. Die Abstützungen der Heizwendel-windungen an der Rippe 52 befinden sich an den jeweiligen Kreuzungsstellen der Wendeln und sind etwa punktförmig. Die gewendelte Rippe 52 ragt in den Strömungsweg des zu erwärmenden Fluids vor, wenn dieses im wesentlichen axial durch die hintereinandergeschalteten Rohre 51 fließt. An der Rippe werden die Strömungsfäden quer nach innen bzw. in eine Drallströmung entsprechend dem gewendelten Verlauf der Rippe 52 umgelenkt. Es bilden sich im Innenraum jedes Aufnahmerohrs 51 verstärkt Turbulenzen, die zu einem verbesserten Wärmeübergang zwischen den einzelnen Heizwendel-Windungen und dem Strömungsmedium führen. Dieser erhöhte Wärmeübergang verbunden mit einem deutlich verbesserten Heizwirkungsgrad, wird erfindungsgemäß ausgenutzt. Die Betriebstemperaturen der Heizwendel können im Vergleich zu herkömmlichen Konstruktionen verringert werden.

Anstelle der bei allen Heizmodulen 5a...5c in Fig. 2 dargestellten jeweils einen gewindeförmigen Rippe 52 können mehrere parallele Rippen an der Innenwand jedes Aufnahmerohrs 51 ausgebildet sein. Die Querschnittsform jeder Rippe 52 ist relativ unkritisch. Anstelle eines relativ scharfkantigen Rückens der Rippe kann ein abgegrundeter Rippen rücken vorgesehen sein.

Jedes Aufnahmerohr 51 wird mit seinen komplementären Anschlußstutzen 53 und 54 sowie mit der mindestens einen Rippe 52 vorzugsweise durch ein besonderes Kunststoff-Spritzgießverfahren hergestellt. Bei der Herstellung wird in einer Außenform ein Kem angeordnet, der den Innenraum 55 des Aufnahmerohrs 51 begrenzt. In diesem in der Zeichnung nicht dargestellten Kern ist wenigstens eine gewendelte Nut ausgebildet, in welcher die gewendelte Rippe 52 während des Spritzgießvorgangs geformt wird. Die Außenform wird (mit Abstand) zu dem koaxialen Kern geschlossen und der Spritzgießvorgang wird durchgeführt. Nach dem Aushärten des zwischen Außenform und Kem befindlichen Formstücks wird die Außenform geöffnet, und der Kern wird durch die öffnung 56 an einem Stirnende des Aufnahmerohrs 51 axial herausgezogen. Während dieser Axialbewegung wird der Kern realtiv zum Formstück 51 in Richtung der gewendelten Rippe 52 gedreht. Es wurde gefunden, daß eine leicht konische Ausbildung des Kerns mit einer Erweiterung in Richtung der Entnahmeöffnung 56 des Aufnahmerohrs 51 das Entformen des Kems wesentlich erleichtert. Eine Beeinträchtigung der Funktion des Heizwendel-Aufnahmerohrs während des Heizbetriebs konnte durch die so entstehende konische Erweiterung des Innenraums 55 nicht festgestellt werden; die leichte Öffnung in Strömungsrichtung des Fluids erhöht sogar die Turbulenzwirkung und den Wirkungsgrad der Beheizung.

Die Heizwendel jedes Heizmoduls 5a wird in das Aufnahmerohr 51 eingesteckt, bevor die nach dem Spritzgießen offenen Stimenden geschlossen werden. Die Stimenden werden üblicherweise durch Abschlußkappen oder platten gasdicht geschlossen, wobei die Kappen oder Platten mit dem Kunststoffrohr 51 verschweißt oder verklebt werden. Derartige Maßnahmen sind im Stande der Technik an sich bekannt, so daß sich eine nähere Erläuterung hier erübrigt.

In Gerätegehäuse kann die Heizstrecke, bestehend aus einer Batterie von beispielsweise drei Heizmodulen, in geeignete Griffschalen einer Unterform eingesetzt werden. Zusätzliche Griffschalen können bereits im Gehäuse vorbereitet sein, um zusätzliche Heizmodule zur Vergrößerung der Heizleistung in dem Gehäuse unterzubringen. Auch können die Schläuche 4 und 6 in geeigneten Ringkammem in einer Unterform eines in der Zeichnung nicht dargestellten Gehäuses eingebettet sein.

Zum axialen Halten der Heizwendeln 50a, 50b und 50c dienen Halteelemente 57, die durch geeignete Mittel am Aufnahmerohr 51 ortsfest angebracht sind. Derartige Halteelemente 57 können beispielsweise die Wand des Aufnahmerohrs 51 durchsetzende, radial in Richtung der Rohrachse 58 vorspringende Zapfen sein. Diese Zapfen können nachträglich, d.h. nach der Befestigung der Heizwendel, von außen durch die Rohrwandung eingesetzt und abgedichtet werden. Andererseits kann das Aufnahmerohr aber auch aus mehreren axialen Abschnitten bestehen, die nach der Herstellung und Anbringung der Halteelemente 57 etwa in der Teilungsebene koaxial zusammengesetzt und abgedichtet werden.

Im folgenden wird auf Figur 3 Bezug genommen, in der die Meß-, Steuer- und Anzeigekomponenten sowie die Leistungsstromkreise des beschriebenen Ausführungsbeispiels schematisch dargestellt sind.

Bei dem Ausführungsbeispiel gemäß Figur 3 werden die TRIAC's 31 der Steuereinrichtung 3 von einer Regelanordnung 3a gesteuert. Letztere enthält eine der Meßwertaufbereitung dienende Eingabeeinheit 32, der neben Meßwerten auch der vom Benutzer eingestellte Warmwasser-Temperatursollwert Tₛ zugeführt wird, eine Ablauf- und Zeitsteuereinheit 33 und - als eigentlichen Regler - eine Fuzzy-Logik 34. Die Fuzzy-Logik wirkt über eine Leistungsansteuerung 35 auf einen oder mehrere der TRIAC's 31. Die TRIAC's 31 versorgen entsprechend ihrer Ansteuerung die ihnen zugeordneten einzelnen Heizelemente 5a, 5b und/oder 5c zur Dekkung des Wärmebedarfs. Letzterer ist bekanntlich abhängig von dem Volumenstrom (durch die Leitung 2) und dem vom Verbraucher eingestellten Temperatursollwert Tₛ. Die Fuzzy-Logik 34 steuert zusätzlich zur Leistungsansteuerungsstufe 35 den Sicherheitsfunktionsblock 36. Der Block 36 steuert die Funktionsanzeige 37-und in bestimmten fehlerhaften Betriebssituationen bzw. Störfällen einen Unterbrecherschalter 38, der zwischen Leistungsansteuerung 35 und allen TRIAC's 31 angeordnet ist. Über eine Verbindung mit der Leistungsansteuerung 35 gelangt die Information über die Freigabe der TRIAC's 31 an den Sicherheitsfunktionsblock 36.

Die Fuzzy-Logik 34 ist über eine Rückkopplung 39 mit der Meßwertaufbereitung 32 verbunden. Über diese Rückkopplung kann die Fuzzy-Logik die Art der Meßwertaufbereitung beeinflussen. Außerdem können in einem zugehörigen Speicher abgelegte Erfahrungswerte aus vorhergehenden Betriebszyklen bei der Meßwertaufbereitung sowie für die Ablauf- und Zeitsteuerung rückgekoppelt werden, um beispielsweise das Überschwingen zu dämpfen und die Reaktionszeit zu optimieren.

Bei dem in Figur 3 dargestellten Ausführungsbeispiel werden dem Block 32 zur Meßwertaufbereitung die folgenden Meßwerte zugeführt: Die Eingangstemperatur Tₑ (Meßstelle 23), die Ausgangstemperatur Tₐ (Meßstelle 30), der Eingangsdruck pₐ, der Ausgangsdruck pₐ und schließlich über ein Meßleitungspaar 46 Meßwerte des Widerstands bzw. Leitwerts der Wassersäule zwischen zwei Heizelementen (z.B. 5a und 5c).

Die Druckdifferenz Δp = pₑ - pₐ kann zum Erkennen des Beginns der Warmwasseranforderung (Öffnen des Wasseraustritts an einer Zapfstelle) und damit zum Einschalten der Steuerelektronik verwendet werden. Da in der Regel ein bestimmter Druck-Anschlußwert im Kaltwasserleitungssystem herrscht, kann ggf. auf eine laufende Druckmessung des Eingangsdrucks pₑ verzichtet werden. In dem Block 32 bzw. in dem der Fuzzy-Logik zugeordneten Mikroprozessor kann die Druckdifferenz Ap auch in einen dem Volumenstrom V entsprechenden Ersatzwert umgewandelt werden. Der für die Temperaturregelung erforderliche Volumenstrom läßt sich aber auch aus der elektrischen Leistung berechnen, die von der Leistungsansteuerung 35 für die TRIAC's 31 freigegeben wird. Zu diesem Zweck können die Ansteuerimpulse am Ausgang der Leistungsansteuerung integriert werden. Die dabei kritischen Netzspannungsschwankungen können mit Hilfe der Fuzzy-Logik 34 geeignet kompensiert werden.

Bei dem beschriebenen Ausführungsbeispiel kann vor Einschalten der Leistung zunächst über das Leitungspaar 46 der Leitwert bzw. Widerstand zwischen zwei räumlich getrennten Punkten der Wassersäule in der Heizstrecke 5 bestimmt werden. Bei zu hohem Widerstand werden die TRIAC's 31 über den Unterbrechungsschalter 38 abgeschaltet, um Trockenlauf und damit die Gefahr der Zerstörung der Heizelemente zu vermeiden. Ebenfalls ein Eingriff in die Sicherheitsfunktionen kann bei zu hoher Leitfähigkeit, d.h. zu niedrigem Widerstand zwischen den Meßleitungen 46 erforderlich sein (Kurzschlußgefahr, Überlastsicherung).

Der Wärmetauscher 29 ist mit dem Katwasserabschnitt (Leitungsabschnitt 2) thermisch derart gekoppelt, daß er die im Betriebsfall von den TRIAC's 31 entwickelte Wärme an den Kaltwasserstrom abgeben kann. Die Eingangstemperatur Tₑ gibt dem Prozessor in der Fuzzy-Logik 34 laufend Aufschluß darüber, ob die über den Kaltwasserstrom abführbare Wärme zur Kühlung der TRIAC's 31 ausreicht. Ist die Eingangstemperatur Tₑ zu hoch, beispielsweise ≥ 20°C, so betätigt die Fuzzy-Logik 34 den Sicherheitsfunktionsgeber 36, der wiederum den Lüfter 8 einschaltet und für eine Zwangskühlung der TRIAC's 31 sorgt. Diese bei Durchlauferhitzem völlig neue Maßnahme läßt sich natürlich mit den gleichen Vorteilen auch bei anders ausgebildeten Durchlauferhitzern verwenden, soweit ein von der Wasser-Eintrittstemperatur abhängiger Meßwert in den Prozessor bzw. eine zugehörige Eingabeeinheit eingegeben wird. Die Zwangskühlung, die auch durch ein flüssiges Medium mit Hilfe einer Pumpe vorgesehen sein kann, wird vorzugsweise dann unterbrochen, wenn das primäre Kühlmedium, nämlich das in der Heizstrecke 5 aufzuheizende Kaltwasser, an der Eintrittsseite einen vorgegebenen Grenzwert unterschreitet.

Bei dem dargestellten Ausführungsbeispiel ist am Ausgang der Heizstrecke 5 bzw. vor dem Warmwasserauslaß ein Volumenstrombegrenzer 62 vorgesehen. Mit dessen Hilfe können die Leistungsreserven des Durchlauferhitzers voll ausgeschöpft werden, was vor allem bei Mehrfachzapfstellen von Bedeutung ist. Als Volumenstrombegrenzer kann eine einfache Drosselstelle dienen.

Bei dem komfortablem Steuergerät gemäß Figur 3 ist außerdem eine Einrichtung zur Wasserenthärtung vorgesehen. Sie besteht aus einem Geber 42, der Rechteckimpulse beispielsweise bei einer Impulsfrequenz von 2 bis 10 kHz entwickelt und dadurch im Bereich des Kaltwassereintritts ein entsprechendes elektromagnetisches Feld erzeugt. Das elektromagnetische Feld sorgt für eine Wasserenthärtung und reduziert dadurch Kalkanlagerungen im unmittelbaren Wirkungsbereich der Heizstrecke 5. Aus Kostengründen kann auf einzelne, den Betriebskomfort erhöhende Funktionen verzichtet werden. Viele Funktionen lassen sich durch einfache Gestaltung der Fuzzy-Logik, d.h. ohne nennenswerte Erhöhung der Herstellungs- und Anlagekosten erreichen. Anstelle einer Fuzzy-Logik kann natürlich auch eine herkömmliche Regeleinrichtung vorgesehen sein, und zwar insbesondere dann, wenn sich die Funktionsabläufe bis zum Erreichen der Solltemperatur am Wasseraustritt hinreichend klar vorherbestimmen bzw. modellieren lassen und keine wesentlichen Instabilitäten oder ein Überschwingen auftreten. Außerdem können bei Bedarf Einschaltverzögerungen von einigen Sekunden insbesondere nach Stromausfall vorgesehen werden. Falls sich in der Heizstrecke 5 ein überhöhter Druck aufbaut, kann ein Druckbegrenzer wirksam gemacht werden.

## Patentansprüche

1. Elektrischer Durchlauferhitzer mit, einem Kaltwassereinlauf (1), einer ersten Isolationsstrecke (4),
einer dieser nachgeschalteten Heizstrecke (5),
einer zweiten Isolationsstrecke (6) und einem Warmwasser-Auslauf (7), wobei die Heizstrecke aus wenigstens einem rohrförmigen Heizmodul (5a, 5b, 5c) besteht, der ein in den Wasserweg eingebundenes, im wesentlichen gerades und rundes Rohr (51) zur Aufnahme einer vom Wasser angeströmten Heizwendel (50a, 50b, 50c) und von den beiden Rohrenden abgehende Anschlußstutzen (53, 54) aufweist; und wobei die ersten und zweiten Isolationsstrecken (4,6) als flexible Schläuche ausgebildet sind, die jeweils mit einem Anschlußstutzen (53,54) eines Heizmoduls druckdicht verbunden sind,
**dadurch gekennzeichnet**,
daß der Durchlauferhitzer eine Steuereinrichtung (3) aufweist; und
daß wenigstens eine wendelförmige Rippe (52) nach Art eines Innengewindes an der Innenwand des Heizwendel-Aufnahmerohres (51) derart ausgebildet ist, daß in dem das Rohr durchströmenden Wasser sowohl Drallals auch Querströmungskomponenten erzwungen und Turbulenzen im Rohr-Innenraum (55) verstärkt hervorgerufen werden, wobei sich die Heizwendel (50a, 50b, 50c) an der Rippe (52) abstützt.

2. Durchlauferhitzer nach Anspruch 1, dadurch gekennzeichnet, daß die Heizstrecke (5) mehrere Heizmodule (5a, 5b, 5c) aufweist, die über komplementär gestaltete Anschlußstutzen (53, 54) lösbar miteinander gekuppelt und in Reihe geschaltet sind.

3. Durchlauferhitzer nach Anspruch 2, dadurch gekennzeichnet, daß die einem Heizmodul (5a) zugeordneten beiden Anschlußstutzen etwa radial und nach entgegengesetzten Seiten vom Aufnahmerohr (51) abgehende, komplementäre Einsteck-und Aufnahmeteile (53, 54) und/oder komplementäre Bajonettkupplungen sind.

4. Durchlauferhitzer nach einem der Ansprüche 1 bis 3, dadurch gekennzeichnet, daß von der Innenwand des Heizelement-Aufnahmerohrs (51) vorspringende Haltemittel (57) zur Begrenzung einer axialen Auslenkbewegung der Heizwendel (50a) vorgesehen sind.

5. Durchlauferhitzer nach einem der Ansprüche 1 bis 4, dadurch gekennzeichnet, daß als Heizwendel (50a, 50b, 50c) Widerstandsdrähte mit metallisch blanker oder suproxidierter Oberfläche vorgesehen sind.

6. Durchlauferhitzer nach einem der Ansprüche 1 bis 5, dadurch gekennzeichnet, daß die Länge der die beiden Isolationsstrecken (4, 6) bildenden flexiblen Schläuche so bemessen ist, daß sie auch für Fluide der höchstmöglichen Leitfähigkeit ausreichend ist.

7. Durchlauferhitzer nach einem der Ansprüche 1 bis 6, dadurch gekennzeichnet, daß jedes Heizelement-Aufnahmerohr (51) und die beiden Anschlußstutzen (53, 54) als einstückiges Kunststoff-Spritzgußformteil ausgebildet sind und daß das Heizelement-Aufnahmerohr an beiden axialen Enden druckdicht verschlossen ist.

8. Durchlauferhitzer nach Anspruch 7, dadurch gekennzeichnet, daß der Innendurchmesser des Heizelement-Aufnahmerohrs (51) nach einem Rohrende (56) hin leicht konisch erweitert ist.

9. Durchlauferhitzer nach Anspruch 4, dadurch gekennzeichnet, daß die Haltemittel mehrere axial beabstandete, vorzugsweise umfangsversetzte Ansätze (57) sind.

10. Durchlauferhitzer nach Anspruch 9, dadurch gekennzeichnet, daß jedes Heizwendel-Aufnahmerohr (51) aus mehreren axialen Rohrabschnitten besteht, die fluiddicht und fest miteinander verbunden sind, und daß die Haltemittel (57) den Verbindungsstellen der Rohrabschnitte benachbart angeordnet sind.

11. Durchlauferhitzer nach einem der Ansprüche 1 bis 10 , dadurch gekennzeichnet, daß die rohrförmigen Heizmodule (5a, 5b, 5c) in Griffschalen einer Gehäuse-Unterform gehalten sind.

12. Durchlauferhitzer nach Anspruch 11, dadurch gekennzeichnet, daß die beiden die Isolationsstrecke bildenden Kunststoffschläuche (4, 6) in Windungen in die Unterform eingesetzt und Mittel vorgesehen sind, um die Schläuche in ihren schlaufenförmigen Windungen knickfrei festzulegen.

13. Durchlauferhitzer nach einem der Ansprüche 1 bis 12, dadurch gekennzeichnet, daß die Steuereinrichtung (3) einem im wesentlichen biegesteifen Leitungsabschnitt (2) zugeordnet ist, der zwischen Kaltwasser-Einlauf (1) und der ersten Isolationsstrecke (4) in den Fluid-Strömungsweg eingebunden ist.

14. Durchlauferhitzer nach einem der Ansprüche 1 bis 13, dadurch gekennzeichnet, daß die Heizstrecke (5) wenigstens zwei einzeln steuerbare und/oder schaltbare Heizelemente (5a-c) aufweist, von denen wenigstens eines wärmebedarfsabhängig steuerbar und eines als letzte Heizstufe (5c) zur Deckung des höchsten Wärmebedarfbereichs zuschaltbar ist.

15. Durchlauferhitzer nach Anspruch 14, dadurch gekennzeichnet, daß ein erster Temperatursensor (23) zur Messung der Fluid-Temperatur (Tₑ) im Kaltwasserbereich und ein zweiter Temperatursensor (30) zur Messung der Fluidtemperatur (Tₐ) im Warmwasserbereich sowie Mittel (8, 80, 29) zur Zwangskühlung von temperaturempfindlichen elektronischen Bauelementen (31) der Steuereinrichtung (3) vorgesehen sind, und daß die Mittel zur Zwangskühlung zumindestens dann wirksam gemacht werden, wenn die vom ersten Temperatursensor (23) gemessene Kaltwassertemperatur (Tₑ) einen oberen Grenzwert übersteigt.

16. Durchlauferhitzer nach Anspruch 15, dadurch gekennzeichnet, daß die Mittel zur Zwangskühlung einen Lüfter (8) und einen mit den zu kühlenden elektronischen Bauelementen (31) in wärmeübertragender Beziehung stehenden Luft-Führungskanal (80) aufweisen.

17. Durchlauferhitzer nach Anspruch 15 oder 16, dadurch gekennzeichnet, daß die Heizleistung der Heizelemente (5a-c) in Abhängigkeit von der Regelabweichung zwischen Solltemperatur (Tₛ) und der vom zweiten Temperatursensor (30) erfaßten Warmwassertemperatur (Tₐ) steuerbar ist.

18. Durchlauferhitzer nach einem der Ansprüche 15 bis 17, dadurch gekennzeichnet, daß erste und zweite Fluid-Druckfuhler zur Messung der Fluiddrücke (pₑ, pₐ) auf der Kaltwasser- und der Warmwasserseite vorgesehen sind und daß die Steuereinrichtung (3) Mittel zur Leistungsansteuerung (31, 35) der Heizelemente aufweist, die in Abhängigkeit von einem voreinstellbaren Differenzdruck (Δp = pₑ - pₐ) freigegeben werden.

19. Durchlauferhitzer nach Anspruch 18, dadurch gekennzeichnet, daß die Steuereinrichtung (3) Mittel zur Verzögerung der Freigabe der Heizwicklungseinschaltung aufweist.

20. Durchlauferhitzer nach einem der Ansprüche 14 bis 19, dadurch gekennzeichnet, daß Mittel zur Messung des elektrischen Widerstands der Wassersäule zwischen zwei Heizelementen (50 a-c) und eine Einrichtung zur Auswertung des Meßergebnisses vorgesehen sind.

21. Durchlauferhitzer nach einem der Ansprüche 14 bis 20, dadurch gekennzeichnet, daß die Steuereinrichtung (3) eine Fuzzy-Logik (34) zur Verarbeitung der Meßwerte und zur Steuerung der Heizwicklungsleistungen aufweist.

22. Durchlauferhitzer nach Anspruch 21, dadurch gekennzeichnet, daß die Fuzzy-Logik Mittel (36) zur Ansteuerung von Sicherheitsfunktionsanzeigen (37) aufweist.

23. Verfahren zur Herstellung eines rohrförmigen Heizmoduls zur Verwendung in einem elektrischen Durchlauferhitzer nach einem der Ansprüche 1 bis 22, dadurch gekennzeichnet, daß das Heizwendel-Aufnahmerohr einstückig dadurch hergestellt wird, daß
a) ein Kern mit wenigstens einer wendelförmigen Rippe nach Art eines Gewindes hoher Steigung hergestellt wird;
b) der Kern mit allseitig gleichmäßigem Umfangsabstand in eine Außenform eingetaucht wird;
c) der Raum zwischen der Außenform und dem Kern danach mit einer Spritzgießmasse aus Kunststoff gefüllt wird;
d) die Spritzgießmasse aushärten gelassen wird; und
e) der Kern nach dem Aushärten unter einer der wendelförmigen Rippe folgenden Drehbewegung relativ zum Formteil aus der öffnung des Formteils axial herausgezogen wird.

24. Verfahren nach Anspruch 23, dadurch gekenn-zeichnet, daß dem Kern in der Herausziehrichtung ein geringfügig zunehmender Querschnitt gegeben wird.

## Claims

1. Electric flow-type heater with a cold water inlet (1), a first insulating section (4), a heating section (5) connected downstream of it, a second insulating section (6) and a warm water outlet (7), whereby the heating section comprises at least one tubular heating module (5a,5b,5c) which has a substantially straight and round pipe (51) incorporated into the water path for receiving a heating coil (50a,50b,50c) against which water flows and connecting sockets (53,54) starting from both ends of the pipe; and whereby the first and second insulating sections (4,6) are constructed as flexible hoses which are connected in a pressure-tight manner to a respective connecting socket (53,54) of a heating module, characterised in that the flow-type heater has a control device (3); and that at least one spiral rib (52) is formed in the manner of an internal thread on the internal wall of the heating coil receiving pipe (51) such that both swirling and transverse flow components are imposed on the water flowing through the pipe and intensified turbulence is generated in the interior (55) of the pipe, the heating coil (50a,50b,50c) being supported on the rib (52).

2. Flow-type heater as claimed in claim 1, characterised in that the heating section (5) has a plurality of heating modules (5a,5b,5c) which are releasably connected together by means of complementarily shaped connection sockets (53,54) and are connected in series.

3. Flow-type heater as claimed in claim 2, characterised in that the two connecting sockets associated with one heating module (5a) are complementary plug and socket members (53,54), which extend radially and on opposite sides from the receiving pipe (51), and/or complementary bayonet couplings.

4. Flow-type heater as claimed in one of claims 1 to 3, characterised in that the retaining means (57) for limiting axial deflection movement of the heating coil (50a) are provided projecting from the inner wall of the heating element receiving pipe (51).

5. Flow-type heater as claimed in one of claims 1 to 4, characterised in that resistance wires with metallically clean or superoxidised surface are provided as the heating coil (50a,50b,50c).

6. Flow-type heater as claimed in one of claims 1 to 5, characterised in that the length of the flexible hoses constituting the two insulating sections (4,6) is such that it is also sufficient for fluids of the highest possible conductivity.

7. Flow-type heater as claimed in one of claims 1 to 6, characterised in that each heating element receiving pipe (51) and the two connecting sockets (53,54) are constructed as a one-piece injection moulded plastic component and that the heating element receiving pipe is closed in a pressure-tight manner at both axial ends.

8. Flow-type heater as claimed in claim 7, characterised in that the internal diameter of the heating element receiving pipe (51) is slightly conically broadened towards one pipe end (56).

9. Flow-type heater as claimed in claim 4, characterised in that the retaining means are a plurality of axially spaced, preferably peripherally offset, projections (57).

10. Flow-type heater as claimed in claim 9, characterised in that each heating coil receiving pipe (51) comprises a plurality of axial pipe sections which are rigidly connected together in a fluid-tight manner and that the retaining means (57) are arranged adjacent the connection points of the pipe sections.

11. Flow-type heater as claimed in one of claims 1 to 10, characterised in that the tubular heating modules (5a,5b,5c) are held in gripping shells of a housing lower mould.

12. Flow-type heater as claimed in claim 11, characterised in that the two plastic hoses (4,6) constituting the insulating sections are inserted in coils into the lower mould and means are provided to secure the hoses in their looped coils without kinks.

13. Flow-type heater as claimed in one of claims 1 to 12, characterised in that the control device (3) is associated with a substantially rigid conduit section (2) which is incorporated into the fluid flow path between the cold water inlet (1) and the first insulating section (4).

14. Flow-type heater as claimed in one of claims 1 to 13, characterised in that the heating section (5) has at least two individually controllable and/or switchable heating elements (5a-c), at least one of which is controllable in dependence on the heat requirement and one of which may be switched on as the last heating stage (5c) to cover the highest heat requirement range.

15. Flow-type heater as claimed in claim 14, characterised in that a first temperature sensor (23) for measuring the fluid temperature ((Te) in the cold water region and a second temperature sensor (30) for measuring the fluid temperature (Ta) in the warm water region and means (8,80,29) for forced cooling of temperature-sensitive electronic components (31) of the control device (3) are provided and that the means for forced cooling are rendered active at least when the cold water temperature (Te) measured by the first temperature sensor (23) exceeds an upper threshold value.

16. Flow-type heater as claimed in claim 15, characterised in that the means for forced cooling have a fan (8) and an air guiding passage (80) in heat-transmitting relationship with the electronic components (31) to be cooled.

17. Flow-type heater as claimed in claim 15 or 16, characterised in that the heating output of the heating elements (5a-c) is controllable in dependence on the control deviation between the desired temperature (Ts) and the warm water temperature (Ta) detected by the second temperature sensor (30).

18. Flow-type heater as claimed in one of claims 14 to 17, characterised in that first and second fluid pressure sensors are provided for measuring the fluid pressures (pₑ, pₐ) on the cold water and hot water sides and that the control device (3) has means for controlling the power (31,35) of the heating elements which are enabled in dependence on a preadjustable differential pressure (Δp = pₑ - pₐ).

19. Flow-type heater as claimed in claim 18, characterised in that the control device (3) has means for delaying the enabling of the switching on of the heating windings.

20. Flow-type heater as claimed in one of claims 14 to 19, characterised in that means are provided for measuring the electrical resistance of the water column between two heating elements (50a-c) and a device for evaluating the measured results.

21. Flow-type heater as claimed in one of claims 14 to 20, characterised in that the control device (3) has a fuzzy logic means (34) for processing the measured values and for controlling the outputs of the heating coils.

22. Flow-type heater as claimed in claim 21, characterised in that the fuzzy logic means has means (36) for controlling safety function indicators (37).

23. Method of manufacturing a tubular heating module for use in an electrical flow-type heater as claimed in one of claims 1 to 22, characterised in that the heating coil receiving pipe is manufactured in one piece by
a) manufacturing a core with at least one spiral rib in the manner of a screwthread of large pitch;
b) the core is inserted into an outer mould with a uniform peripheral gap on all sides;
c) the space between the outer mould and the core is thereafter filled with an injection moulding composition of plastic material;
d) the injection moulding composition is permitted to set; and
e) the core is axially withdrawn from the opening in the moulded member after setting with a rotational movement relative to the moulded member following the spiral rib.

24. Method as claimed in claim 23, characterised in that the core is given a slightly increasing cross-section in the withdrawal direction.

## Revendications

1. Chauffe-eau électrique instantané comportant une entrée d'eau froide (1), un premier tronçon d'isolement (4), un tronçon de chauffage (5) placé après celui-ci, un deuxième tronçon d'isolement (6) et une sortie d'eau chaude (7), le tronçon de chauffage étant constitué d'au moins un module de chauffage tubulaire (5a, 5b, 5c) qui présente un tube sensiblement droit et rond (51) monté dans le circuit de l'eau et destiné à recevoir un élément chauffant (50a, 50b, 50c), et des tubulures de raccordement (53, 54) partant des deux extrémités de ce tube, et les premier et deuxième tronçons d'isolement (4, 6) étant formés de tuyaux souples qui sont joints chacun de manière étanche à la pression à une tubulure de raccordement (53, 54) d'un module de chauffage,
caractérisé par le fait
que le chauffe-eau instantané présente un dispositif de commande (3),
et
qu'au moins une nervure en hélice (52) est faite à la manière d'un filetage intérieur dans ou sur la paroi intérieure du tube récepteur d'élément chauffant (51) de façon telle que des composantes d'écoulement giratoires et transversales soient produites de force dans l'eau qui parcourt le tube et des turbulences soient produites de manière amplifiée à l'intérieur (55) du tube, l'élément chauffant (50a, 50b, 50c) étant en appui sur la nervure.

2. Chauffe-eau instantané selon la revendications 1, caractérisé par le fait que le tronçon de chauffage (5) présente plusieurs modules de chauffage (5a, 5b, 5c) qui sont accouplés de manière séparable par des tubulures de raccordement de forme complémentaire (53, 54) et montés en série.

3. Chauffe-eau instantané selon la revendication 2, caractérisé par le fait que les deux tubulures de raccordement associées à un module de chauffage (5a) sont des éléments mâle et femelle complémentaires (53, 54) et/ou des raccords à baïonnette complémentaires partant du tube récepteur (51) à peu près radialement et vers des côtés opposés.

4. Chauffe-eau instantané selon l'une des revendications 1 à 3, caractérisé par le fait qu'il est prévu des moyens d'arrêt (57) saillant de la paroi intérieure du tube récepteur d'élément chauffant (51) destinés à limiter un déplacement axial de l'hélice chauffante (50a).

5. Chauffe-eau instantané selon l'une des revendications 1 à 4, caractérisé par le fait que, comme hélices chauffantes (50a, 50b, 50c) sont prévus des fils résistants à surface d'un blanc métallique ou superoxydée.

6. Chauffe-eau instantané selon l'une des revendications 1 à 5, caractérisé par le fait que la longueur des tuyaux souples formant les deux tronçons d'isolement (4, 6) est telle qu'elle soit aussi suffisante pour des fluides ayant la conductivité la plus haute possible.

7. Chauffe-eau instantané selon l'une des revendications 1 à 6, caractérisé par le fait que chaque tube récepteur d'élément chauffant (51) et les deux tubulures de raccordement (53, 54) sont formés d'une seule pièce en matière plastique moulée par injection et que le tube récepteur d'élément chauffant est fermé à ses deux extrémités axiales de manière étanche à la pression.

8. Chauffe-eau instantané selon la revendication 7, caractérisé par le fait que le tube récepteur d'élément chauffant (51) s'évase légèrement intérieurement coniquement vers une extrémité (56).

9. Chauffe-eau instantané selon la revendication 4, caractérisé par le fait que les moyens d'arrêt sont plusieurs appendices espacés axialement et de préférence décalés circonférentiellement (57).

10. Chauffe-eau instantané selon la revendication 9, caractérisé par le fait que chaque tube récepteur d'hélice chauffante (51) est constitué de plusieurs tronçons axiaux joints rigidement et de manière étanche aux fluides, et que les moyens d'arrêt (57) sont placés à proximité des jonctions de ces tronçons.

11. Chauffe-eau instantané selon l'une des revendications 1 à 10, caractérisé par le fait que les modules de chauffage tubulaires (5a, 5b, 5c) sont tenus dans des cuvettes de préhension d'une cavité inférieure de carter.

12. Chauffe-eau instantané selon la revendication 11, caractérisé par le fait que les deux tuyaux souples en matière plastique (4, 6) formant les tronçons d'isolement sont placés en spires dans la cavité inférieure et qu'il est prévu des moyens pour fixer sans coudes ces tuyaux souples, en leurs spires en forme de boucle.

13. Chauffe-eau instantané selon l'une des revendications 1 à 12, caractérisé par le fait que le dispositif de commande (3) est adjoint à un tronçon de conduite résistant à la flexion (2) qui est monté dans le circuit de fluide entre l'entrée d'eau froide (1) et le premier tronçon d'isolement (4).

14. Chauffe-eau instantané selon l'une des revendications 1 à 13, caractérisé par le fait que le tronçon de chauffage (5) présente au moins deux éléments chauffants (5a à 5c) pouvant être commandés et/ou commutés individuellement dont au moins un peut être commandé en fonction des besoins de chaleur et un peut être mis en circuit comme dernier étage de chauffage (5c) pour couvrir le domaine du plus haut besoin de chaleur.

15. Chauffe-eau instantané selon la revendication 14, caractérisé par le fait qu'il est prévu un premier capteur de température (23) pour la mesure de la température du fluide (Tₑ) dans la zone de l'eau froide, un deuxième capteur de température (30) pour la mesure de la température du fluide (Tₐ) dans la zone de l'eau chaude et des moyens (8, 80, 29) de refroidissement forcé de composants électroniques sensibles à la température (31) du dispositif de commande (3), et que les moyens de refroidissement forcé sont mis en action au moins lorsque la température de l'eau froide (Tₑ), mesurée par le premier capteur de température (23), dépasse une limite supérieure.

16. Chauffe-eau instantané selon la revendication 15, caractérisé par le fait que les moyens de refroidissement forcé présentent un ventilateur (8) et un conduit de guidage d'air (80) en relation de transmission de chaleur avec les composants électroniques (31) à refroidir.

17. Chauffe-eau instantané selon l'une des revendications 15 et 16, caractérisé par le fait que la puissance de chauffage des éléments chauffants (5a à 5c) peut être commandée en fonction de l'écart de régulation entre la température prescrite (Tₛ) et la température de l'eau chaude (Tₐ) saisie par le deuxième capteur de température (30).

18. Chauffe-eau instantané selon l'une des revendications 14 à 17, caractérisé par le fait qu'il est prévu des premier et deuxième capteurs de pression de fluide pour la mesure des pressions (pₑ, pₐ) du fluide du côté eau froide et du côté eau chaude et que le dispositif de commande (3) présente des moyens (31, 35) de commande de la puissance des éléments chauffants qui sont débloqués en fonction d'une pression différentielle préréglable (Δp = pₑ - pₐ).

19. Chauffe-eau instantané selon la revendication 18, caractérisé par le fait que le dispositif de chauffage (3) présente des moyens de temporisation du déblocage de la mise en circuit des enroulements chauffants.

20. Chauffe-eau instantané selon l'une des revendications 14 à 19, caractérisé par le fait qu'il est prévu des moyens de mesure de la résistance électrique de la colonne d'eau entre deux éléments chauffants (50a à 50c) et un dispositif d'exploitation du résultat de la mesure.

21. Chauffe-eau instantané selon l'une des revendications 14 à 20, caractérisé par le fait que le dispositif de commande (3) présente une logique floue (34) pour le traitement des valeurs mesurées et la commande des puissances des enroulements chauffants.

22. Chauffe-eau instantané selon la revendication 21, caractérisé par le fait que la logique floue présente des moyens (36) de commande d'indicateurs de fonctions de sécurité (37).

23. Procédé de fabrication d'un module de chauffage tubulaire destiné à être utilisé dans un chauffe-eau électrique instantané selon l'une des revendications 1 à 22, caractérisé par le fait qu'on fabrique le tube récepteur d'hélice chauffante d'une seule pièce de la manière suivante :
a) on fabrique un noyau ayant au moins une nervure en hélice à la manière d'un filetage à grand pas,
b) on plonge ce noyau dans un moule extérieur avec distance périphérique égale de tous les côtés,
c) ensuite, on remplit l'espace entre le moule extérieur et le noyau en y injectant de la matière plastique,
d) on laisse durcir la matière injectée, et
e) après le durcissement, on retire axialement le noyau de l'ouverture de la partie de moule par un mouvement de rotation suivant la nervure en hélice par rapport à la partie de moule.

24. Procédé selon la revendication 23, caractérisé par le fait qu'on donne au noyau dans la direction de retrait une section légèrement croissante.
